# EUROPÄISCHE PATENTSCHRIFT

(11) **EP 0 480 336 B1**
(45) Veröffentlichungstag und Bekanntmachung des Hinweises auf die Patenterteilung: **24.01.1996**
(21) Anmeldenummer: 91116974.6
(22) Anmeldetag: 04.10.1991
(51) Int. Cl.: C08F 297/02, C08L 53/00

(54) **Verwendung amphiphiler elastomerer Blockcopolymerisate**
The use of amphiphilic block copolymers
Utilisation de bloc copolymères élastomèrique amphiphilique

(30) Priorität: 11.10.1990 DE 4032237
(43) Veröffentlichungstag der Anmeldung: 15.04.1992
(73) Patentinhaber: HOECHST AKTIENGESELLSCHAFT, D-65926 Frankfurt am Main (DE)
(72) Erfinder: Gries, Willi-Kurt, Dr., Dipl.-Chem., W-6200 Wiesbaden (DE)

## Beschreibung

Die Erfindung betrifft die Verwendung amphiphiler elastomerer Blockcopolymerisate, die insbesondere als Bindemittel in lichthärtbaren elastomeren Gemischen für die Herstellung von Reliefdruckplatten geeignet sind.

Aus der DE-C 22 15 090 (= GB-A 1 366 769) sind Blockcopolymerisate bekannt, die elastomere Polymerblöcke mit einer Glastemperatur T_{g} von weniger als 10 °C, eingebettet zwischen nicht elastomeren Polymerblöcken mit einer Glastemperatur von mehr als 25 °C, enthalten. Polymere mit ionischen oder ionisierbaren Gruppen sind nicht genannt. Ebensowenig sind Angaben über eine etwaige Oberflächenaktivität der Blockcopolymerisate enthalten. Die Blockcopolymerisate werden als Bindemittel in photopolymerisierbaren Schichten verwendet.

Blockcopolymerisate der allgemeinen Struktur A-B-A-C, speziell Styrol-Butadien-Styrol-Vinylpyridin-Blockcopolymerisate sind in der GB-A 1 156 300 offenbart. Blockcopolymerisate, die saure Gruppen enthalten, werden nicht genannt.

Ein tert.-Butylstyrol-tert.-Butylmethacrylat-Blockcopolymerisat und seine Umwandlung in ein tert.-Butylstyrol-Methacrylsäure-Blockcopolymerisat durch Behandlung mit p-Toluolsulfonsäure in Toluol beschreiben T. E. Long et al. [Polymer Preprints 28 (1987), Seiten 384-386]. Die einzelnen Polymerblöcke in diesen Blockcopolymerisaten weisen eine Glastemperatur T_{g} von jeweils mehr als +30 ° C auf.

Tert.-Butylmethacrylat-Isopren-tert.-Butylmethacrylat-Blockcopolymerisate sowie die Herstellung dieser "Dreiblock"-Copolymerisate durch anionische Polymerisation sind in dem Aufsatz von T. E. Long et al., J. Polymer Sci., Part A: Polymer Chemistry 27 (1989), Seiten 4001-4012, beschrieben. In dieser Literaturstelle sind jedoch keine Blockcopolymerisate, die ionische bzw. ionisierbare Gruppen enthalten, genannt.

In der EP-A 0 298 667 sind Zusammensetzungen offenbart, die zu mindestens 90 Gew.-% aus Blockcopolymeren bestehen, die Blöcke aus hydrolysierbaren Methacrylsäure-(C₂-C₅)alkylestern, Methacrylsäure und/oder bestimmte Salze der Methacrylsäure enthalten. Außerdem ist mindestens ein weiterer Block aus einem anderen anionisch polymerisierbaren Monomer (z.B. einem konjugierten Dien, wie Butadien oder Isopren, oder einem nicht-hydrolisierbaren Methacrylsäureester) vorhanden. Die Blockcopolymere können auch Blöcke aus Monovinyl-Aromaten, wie Styrol, enthalten. Die offenbarten Zusammensetzungen werden in thermoplastischen Kunststoffen zur Veränderung der Schlagzähigkeit, als Elastomere in Schläuchen, Containern oder Dichtungsringen sowie in Klebstoffen verwendet.

Es bestand daher die Aufgabe, geeignete Blockcopolymerisate zu finden, die bei der Herstellung von Flachdruckplatten, Tiefdruckzylindern und Photoresists sowie als Bindemittel in lichthärtbaren elastomeren Gemischen zur Herstellung von Reliefdruckplatten eingesetzt werden können.

Die Aufgabe wird gelöst durch die Verwendung eines elastomeren Blockcopolymerisats der allgemeinen Struktur A-B, B-A-B, C-A-B, C-A-C-B, B-C-A-C-B, AₙXBₙ, (A-B)ₙX, CₙX(A-B)ₙ, (C-A)ₙXBₙ, (C-A-B)ₙX, CₙX(A-C-B)ₙ, (C-A)ₙX(C-B)ₙ, (C-A-C)ₙXBₙ, (C-A-C-B)ₙX, BₙXAₙXBₙ, X(B-A-B)ₙX-, (B-C)ₙXAₙX(C-B)ₙ, BₙX(C-A-C)ₙXBₙ oder X(B-C-A-C-B)ₙX, wobei
- A: hydrophobe, weiche Blöcke mit einer Tg < -30 °C,
- B: hydrophile, harte Blöcke, die saure Gruppen enthalten, mit einer Tg > 30 °C,
- C: hydrophobe, harte Blöcke mit einer Tg > 50 °C,
- X: eine Einheit, gebildet aus einer Verbindung mit mehreren Vinyl- oder Isopropenylgruppen, oder einen aus solchen Verbindungen entstandenen Homopolymerisat-Block, der in der Regel verzweigt bzw. vernetzt ist, bezeichnet und
- n: das zahlenmäßige Verhältnis von A/B/C-Homopolymer-Blöcken zu der Einheit X bzw. zu dem Homopolymerisatblock X angibt,
und wobei die Polymerblöcke A einen Anteil von 20 bis 99 Gew.-%, die Polymerblöcke B einen Anteil von 1 bis 30 Gew.-% und die Polymerblöcke C einen Anteil von 0 bis 79 Gew.-% an dem elastomeren Blockcopolymerisat ausmachen.

Die durch Gelpermeationschromatographie (GPC) bestimmten Molekulargewichte der Blockcopolymerisate (vor Abspaltung der Schutzgruppen) bewegen sich zwischen 2.000 g/mol und 2.000.000 g/mol, vorzugsweise zwischen 15.000 g/mol und 200.000 g/mol.

Die elastomeren Blockcopolymerisate werden als "amphiphil" bezeichnet, weil sie sowohl wasseranziehende (hydrophile) als auch wasserabstoßende (hydrophobe) Abschnitte aufweisen und damit Tensidcharakter besitzen.

Der Grad der Hydrophilie läßt sich in einfacher Weise durch passende Wahl des pH-Wertes einstellen: Bei einem hohen pH-Wert liegen die Carboxygruppen zu einem großen Anteil in deprotonierter Form vor, was eine höhere Polarität bewirkt und entsprechend eine stärkere Hydrophilie.

Die Homopolymerisation von 1,3-Dienen sowie die Copolymerisation von 1,3-Dienen mit Vinylaromaten oder mit polaren Monomeren mit Hilfe anionischer Methoden ist dem Fachmann hinreichend bekannt [s. z. B. G. Sylvester und P. Müller in Houben-Weyl-Müller, Methoden der Organischen Chemie E 20/2, 798ff. (1987) und G. Schröder in Houben-Weyl-Müller, Methoden der Organischen Chemie E20/2, 1141ff. (1987)].

Die Blockcopolymerisate werden zweckmäßig durch aufeinanderfolgende anionische Polymerisation hergestellt, wobei funktionelle Gruppen in den Monomeren durch passend gewählte Schutzgruppen geschützt werden müssen, wenn diese sonst unter den Bedingungen der anionischen Polymerisation in unerwünschter Weise reagieren würden. Geschützt werden müssen in jedem Falle Carboxy-Gruppen. Die Abspaltung der Schutzgruppen erfolgt direkt nach Beendigung der Polymerisation oder in einer Folgestufe.

Die in der Organischen Chemie üblichen Methoden zum Schutz funktioneller Gruppen sind z. B. in der Monographie von T. W. Greene, Protective Groups in Organic Synthesis, Wiley Interscience, New York 1981, ausführlich dargestellt.

Als Monomere für die Blockpolymerisate A sind konjugierte Diene, wie 1,3-Butadien, Isopren, 2,3-Dimethyl-1,3-butadien, 1,3-Pentadien, 2-Ethyl-3-Methyl-1,3-butadien, 3-Methyl-1,3-pentadien, 2-Methyl-3-ethyl-1,3-pentadien, 2-Ethyl-1,3-pentadien, 1,3-Hexadien, 2-Methyl-1,3-hexadien, 1,3-Heptadien, 1,3-Octadien, 3,4-Dimethyl-1,3-hexadien und 2-Phenyl-1,3-butadien geeignet. Der Einsatz von Gemischen geeigneter Diene bzw. die Anwendung anderer anionisch polymerisierbarer konjugierter Diene mit 4 bis 12 Kohlenstoffatomen kommen ebenfalls in Betracht. Bevorzugt sind Isopren und 1,3-Butadien.

Die Blockpolymerisate B resultieren bevorzugt aus α,β-ethylenisch ungesättigten Carbonsäuren wie Maleinsäure, Fumarsäure, Itaconsäure, Acrylsäure, Methacrylsäure und Crotonsäure. Andere Carbonsäuren mit in der Elektronendichte herabgesetzten C-C-Doppelbindungen, wie z. B. Vinylbenzoesäure, können ebenfalls als Ausgangsmaterialien dienen. Die ungesättigten Carbonsäuren werden in einer geeigneten geschützten Form eingesetzt, insbesondere als Benzylester, tert.-Butylester oder auch in Form der entsprechenden [1,3]Oxazoline. Bevorzugt ist tert.-Butylmethacrylat und tert.-Butylacrylat.

Als Ausgangsmaterialien für Blockpolymerisate C sind Vinylaromaten, insbesondere Styrol, Alkylstyrol oder Vinylnaphthalin geeignet, wobei Styrol besonders bevorzugt ist.

Die Einheiten bzw. Blöcke X werden durch Reaktion der anionischen Kettenendglieder mit Verbindungen, die mindestens zwei Vinyl- oder Isopropenylgruppen enthalten, eingeführt. Vorteilhaft werden Di- und Trivinylbenzol sowie Verbindungen mit mindestens zwei Methacryloyloxy-Gruppen verwendet. Besonders bevorzugt sind 1,4-Divinylbenzol, 1,3-Diisopropenylbenzol, Ethylenglykoldimethacrylat und Trimethylolpropantrimethacrylat.

Die Anionenketten-Polymerisation wird eingeleitet durch die dafür üblichen lithiumorganischen Verbindungen R-Li, wobei mit R aliphatische, cyclo-aliphatische, aromatische oder gemischt aliphatisch-aromatische Reste bezeichnet werden. Geeignet sind z. B. Methyllithium, Ethyllithium, n-, sec.- und tert.-Butyllithium, Cyclohexyllithium, Isopropyllithium, Phenyllithium und p-Tolyllithium. Außerdem können bifunktionelle, in unpolaren Medien aktive Initiatoren, wie sie beispielsweise durch radikalische Kupplung von Diphenylethen mittels Li-Metall entstehen oder durch Reaktion von Diisopropenylbenzol mit Li-organischen Verbindungen gebildet werden, Verwendung finden. Bevorzugt ist sec.- bzw. n-BuLi sowie 1,4-Dilithio-1,1,4,4-tetraphenylbutan.

Die Copolymerisation wird unter den für die Handhabung von extrem feuchtigkeits- und sauerstoffempfindlichen Reagenzien üblichen Bedingungen durchgeführt, d. h. insbesondere, daß unter getrockneter Inertgasatmosphäre, z. B. unter einer Stickstoff- oder Argonatmosphäre, gearbeitet werden muß. Als Lösemittel werden aliphatische, cycloaliphatische und aromatische Kohlenwasserstoffe, wie Isobutan, n-Pentan, Isooctan, Cyclopentan, Cyclohexan, Cycloheptan, Benzol, Toluol oder Xylol sowie Gemische dieser Solventien eingesetzt. Es ist häufig zweckmäßig, in Gegenwart dipolar aprotischer Lösemittel zu arbeiten, um eine regioselektive Reaktion der Monomeren zu gewährleisten und so den Anteil an Produkten aus Nebenreaktionen gering zu halten. (Eine Reaktion wird als "regioselektiv" bezeichnet, wenn von zwei oder mehreren zur Reaktion befähigten Zentren eines Moleküls eines weit überwiegend oder allein reagiert.) Besonders bevorzugte dipolar aprotische Lösemittel sind Ether, wie beispielsweise Tetrahydrofuran, Dimethoxyethan oder Methylphenylether. Zur Erzielung bestimmter Eigenschaften der Produkte erweist es sich als günstig, die anionische Copolymerisation in unpolaren, aprotischen Solventien zu beginnen, jedoch mit fortschreitendem Umsatz die Polarität des Solvens durch Zugabe stärker polarer Ether zu erhöhen. Der Volumenanteil der Ether kann dabei bis über 95 % des Gesamtlösemittelvolumens betragen.

Die anionischen Kettenenden der B-Blöcke besitzen häufig eine zu starke Nucleophilie. Vor der weiteren Copolymerisation ist daher eine Reduzierung der Nucleophilie des anionischen Kettenendes zweckmäßig. Dies läßt sich durch den Zusatz von ungesättigten Verbindungen der allgemeinen Formel CH₂=CR¹R erreichen. R¹ und R stehen dabei für Aryl- bzw. Alkylarylgruppen, insbesondere jedoch für gegebenenfalls substituierte Phenylgruppen. Doch sind auch 1-Phenyl-l-naphthylethen und seine Derivate brauchbar. Auch Styrole (R¹ = gegebenenfalls substituiertes Phenyl, R = H oder C₁-C₆-Alkyl) sind geeignet, insbesondere wenn Styrol-Blockpolymerisate eingeführt werden sollen. Bevorzugt ist jedoch 1,1-Diphenylethen.

Die Reaktionsführung erfolgt dabei in der Art, daß die zum Aufbau von Folgeblöcken notwendigen ethylenisch ungesättigten Verbindungen erst nach weitgehendem Umsatz der bereits vorhandenen Monomere zugegeben werden. Die Reaktionstemperatur wird zwischen -80 °C und +120 °C eingestellt. Vorzugsweise variieren die Temperaturen zwischen -20 °C und +60 °C. Die zum Aufbau der B-Blöcke eingesetzten Monomere können bei Raumtemperatur, besser jedoch zwischen -20 °C und +20 °C, polymerisiert werden. Nach Beendigung des gewünschten Blockaufbaus können die polymeren Anionen durch protische Solventien, wie z.B. Alkohole, desaktiviert werden. Darüber hinaus besteht die Möglichkeit, mit den beschriebenen polyfunktionellen Vinylverbindungen verzweigte Blockcopolymere herzustellen.

Die Abspaltung der Schutzgruppen erfolgt wahlweise direkt nach Abschluß der Polymerisation oder in einem Folgeschritt, für den die zuvor ausgefällten Copolymeren wieder in Lösung gebracht werden, durch Zugabe von katalytischen Mengen einer starken Säure und Erwärmen auf 40 bis 120 °C. Geeignete Säuren sind u. a. alkoholische Salzsäure, Trifluoressigsäure und Sulfonsäuren, wie Benzolsulfonsäure, p-Toluolsulfonsäure oder Camphersulfonsäure. Der Fortgang der Reaktion ist dabei durch Säure/Base-Titration an isolierten Proben zu kontrollieren.

Die elastomeren Blockcopolymerisate eignen sich nicht nur zur Herstellung von Reliefdruckplatten, sondern können ebenso verwendet werden für Flachdruckplatten, Tiefdruckzylinder, Siebdruckschablonen, insbesondere auch für Photoresists (siehe die gleichzeitig eingereichte DE-A 40 32 238).

Die Erfindung wird durch die nachstehenden Beispiele erläutert. Wenn nichts anderes angegeben, sind Prozentangaben als Gewichtsprozente zu verstehen.

### Herstellung der Blockcopolymere

### Herstellungsbeispiel 1

(Isopren/Acrylsäure-Blockcopolymerisat): In einer trockenen, mehrfach evakuierten und mit vorgetrocknetem Stickstoff belüfteten Glasapparatur werden 50 ml wasserfreies Toluol vorgelegt, dann 500 mmol trockenes Isopren und anschließend 0,38 ml einer 1,6 M n-BuLi-Lösung in Hexan zugesetzt. Die Polymerisationsmischung wird 3 h gerührt, wobei ein stärkerer Temperaturanstieg in der Mischung mit Hilfe eines Wasserbades von etwa Raumtemperatur verhindert wird. Dann werden zwei Äquivalente an 1,1-Diphenylethen, bezogen auf die molare Menge des Starters (n-BuLi), zugefügt, mit 50 ml THF verdünnt und mit Hilfe einer Kochsalz/Eiswasser-Mischung abgekühlt.

Zur 0 bis 5 °C kalten Reaktionsmischung werden 20,7 mmol t-Butylmethacrylat zugegeben, noch 1 h im Eisbad nachgerührt und die Polymerisation mit 1 ml Methanol abgebrochen. Die Reaktionslösung wird anschließend in das 10-fache Volumen Methanol feinverteilt eingetragen. Das ausgefallene Polymere wird abgesaugt, gewaschen und getrocknet. Zur Entfernung der t-Butyl-Schutzgruppe wird das isolierte Material in Toluol gelöst mit 5 Gew.-% p-Toluolsulfonsäure, bezogen auf t-Butylmethacrylat, versetzt und 6 h auf 80 °C erwärmt. Nach Abkühlen wird mit MeOH ausgefällt, gewaschen und im Vakuum bei Raumtemperatur getrocknet.

Ausb.: 87 % (89 %); Mₚ (GPC): 48000 (vor Abspaltung der tert.-Butyl-Schutzgruppe); SZ: 63,0 mg KOH/g

### Herstellungsbeispiele 2 bis 7:

In analoger Weise werden die in Tabelle 1 (Erklärungen dazu sind im Tabellenanhang zu finden) aufgelisteten Beispiele hergestellt. Bei Verwendung von Cyclohexan als Lösemittel wird die Dien-Polymerisation in einem Glasautoklaven bei 60 °C durchgeführt. Völlig analog wird Butadien entweder bei Raumtemperatur in Toluol oder bei 60 °C in Cyclohexan zur Reaktion gebracht, wobei in beiden Fällen in einem Glasautoklaven gearbeitet wird. Aufarbeitung und Abspaltung der Schutzgruppen werden wie in Beispiel 1 beschrieben durchgeführt.

**Tabelle 1:**

| **Kenngrößen zu den Herstellungsbeispielen 2 bis 7** | | | | | | |
|---|---|---|---|---|---|---|
| Beispiel Nr. | Solvens 1) | Zusammensetzung 2) | | Ausbeute 3) | Mₚ (GPC) 4) | SZ 5) |
| 2 | I | 85% I | 15% MAA | 89% (78%) | 51 000 | 86,3 |
| 3 | I | 95% I | 5% MAA | 93% (84%) | 58 000 | 11,8 |
| 4 | I | 90% I | 10% MAA | 94% (86%) | 54 000 | 59,7 |
| 5 | II | 90% I | 10% MAA | 98% (93%) | 83 000 | 53,8 |
| 6 | I | 90% I | 10% AA | 86% (37%) | 57 000 | 27,4 |
| 7 | II | 90% B | 10% MAA | 87% (96%) | 65 000 | 56,4 |

### Herstellungsbeispiel 8:

In einem trockenen Glasautoklaven bzw. einer Glasapparatur werden unter Inertgasatmosphäre zu einer Mischung aus 40 ml Toluol und 80,6 mmol Styrol 1,33 ml 1,6 M n-BuLi-Lösung in Hexan gegeben. Das sich erwärmende Reaktionsgemisch wird 2 h im Wasserbad gerührt, mit 160 ml Toluol verdünnt und nach Zugabe von 500 mmol Isopren noch 2,5 h weitergerührt. Die dickflüssige Reaktionslösung wird mit 3,80 mmol 1,1-Diphenylethen und 200 ml THF versetzt. Anschließend wird mit einer NaCl/Eiswasser-Mischung abgekühlt. Nach Zugabe von 99,6 mmol t-Butylmethacrylat wird noch 1 h im Kältebad gerührt. Termination, Aufarbeitung und Schutzgruppenentfernung erfolgen in Analogie zum Herstellungsbeispiel 1.

Ausb.: 97 % (83 %); Mₚ (GPC): 49000 (vor Abspaltung der tert.-Butyl-Schutzgruppe); SZ: 68,0 mg KOH/g

### Herstellungsbeispiele 9 bis 17:

Die Herstellung und Schutzgruppenentfernung erfolgt in gleicher Weise wie unter Herstellungsbeispiel 8 beschrieben. Die Kenndaten der entsprechenden Polymere sind in Tabelle 2 aufgelistet.

**Tabelle 2:**

| **Kenngrößen zu den Herstellungsbeispielen 9 bis 17** | | | | | | | |
|---|---|---|---|---|---|---|---|
| Beispiel Nr. | Solvens 1) | Zusammensetzung (in %) 2) | | | Ausbeute (in %) 3) | Mₚ (GPC) 4) | SZ 5) |
| 9 | I | 10 S | 80 I | 10 MAA | 94 (86) | 64 000 | 58,7 |
| 10 | I | 10 S | 85 I | 5 MAA | 78 (77) | 59 000 | 9,1 |
| 11 | I | 10 S | 75 I | 15 MAA | 82 (89) | 49 000 | 101 |
| 12 | I | 10 S | 80 I | 10 MAA | 79 (78) | 94 000 | 208 |
| 13 | I | 10 S | 80 I | 10 MAA | 83 (86) | 142 000 | 66,4 |
| 14 | I | 20 S | 70 I | 10 MAA | 99 (83) | 59 000 | 64,4 |
| 15 | II | 10 S | 70 I | 20 MAA | 98 (77) | 109 000 | 120 |
| 16 | II | 20 S | 70 I | 10 MAA | 92 (95) | 126 000 | 60,3 |
| 17 | II | 10 S | 80 B | 10 MAA | 89 (92) | 68 000 | 59,8 |

### Herstellungsbeispiele 18 bis 20:

In gleicher Weise wie im Herstellungsbeispiel 8 beschrieben können auch 4-Blocksysteme synthetisiert werden, jedoch wird zwischen Isopren- und t-Butylmethacrylat-Block die entsprechende Menge Styrol einpolymerisiert. Die dazugehörigen Daten sind in Tabelle 3 aufgeführt.

**Tabelle 3:**

| **Kenngrößen zu den Herstellungsbeispielen 18 bis 20** | | | | | | | | |
|---|---|---|---|---|---|---|---|---|
| Beispiel Nr. | Solvens 1) | Zusammensetzung (in %) 2) | | | | Ausbeute (in %) 3) | Mₚ (GPC) 4) | SZ 5) |
| | | S | I | S | MAA | | | |
| 18 | I | 10 | 70 | 10 | 10 | 69 (98) | 58 000 | 58,0 |
| 19 | I | 10 | 60 | 10 | 10 | 87 (82) | 57 000 | 67,1 |
| 20 | II | 10 | 70 | 10 | 10 | 93 (76) | 55 000 | 122 |

### Herstellungsbeispiele 21 bis 25:

Die Reaktionsführung entspricht der im Herstellungsbeispiel 8. Die Vernetzungskomponenten werden nach der gewünschten Blocksequenz zugegeben und 1 h zur Reaktion gebracht. Die Daten der jeweiligen Polymeren können der Tabelle 4 entnommen werden.

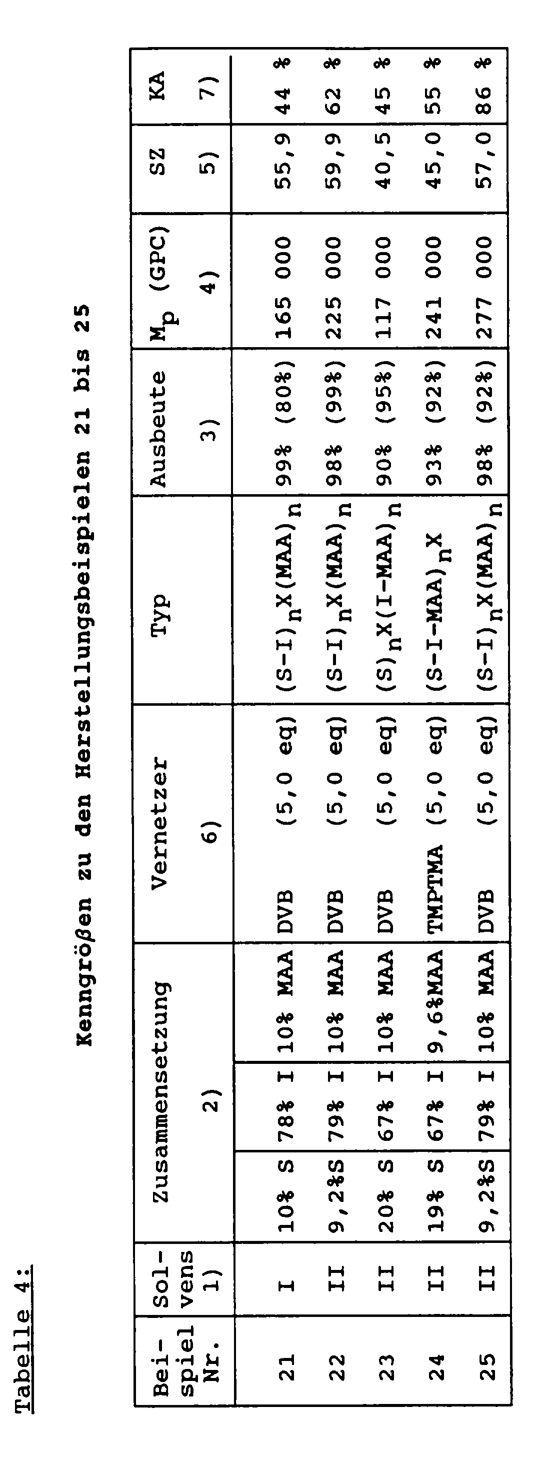

### Tabellenanhang:

1)I = Toluol/Tetrahydrofuran
   II = Cyclohexan/Tetrahydrofuran
2) I = Isopren, MMA = Methacrylsäure,
   AA = Acrylsäure, B = Butadien, S = Styrol
3) Ausbeute nach Abspaltung der Schutzgruppen in Klammern angegeben
4) Mittleres Molekulargewicht, ermittelt durch GPC-Messung mit THF als Lösemittel und Polyisopren als Standard (Material vor Abspaltung der Schutzgruppen)
5) Säurezahl (in mg KOH/g)
6)DVB = Divinylbenzol (Isomerengemisch)
   TMPTMA = Trimethylolpropantrimethacrylat
   (eq = Äquivalentangabe, bezogen auf die Menge an lithiumorganischer Verbindung)
7)Kupplungsausbeute, berechnet aus dem Integral der Massenverteilungskurve (aus Gelpermeationschromatographie mittels RI-Detektor)

## Patentansprüche

1. Verwendung eines elastomeren Blockcopolymerisats der allgemeinen Struktur A-B, B-A-B, C-A-B, C-A-C-B, B-C-A-C-B, AₙXBₙ, (A-B)ₙX, CₙX(A-B)ₙ, (C-A)ₙXBₙ, (C-A-B)ₙX, CₙX(A-C-B)ₙ, (C-A)ₙX(C-B)ₙ, (C-A-C)ₙXBₙ, (C-A-C-B)ₙX, BₙXAₙXBₙ, X(B-A-B)ₙX-, (B-C)ₙXAₙX(C-B)ₙ, BₙX(C-A-C)ₙXBₙ oder X(B-C-A-C-B)ₙX, wobei A hydrophobe, weiche Blöcke mit einer Tg < -30 °C, B hydrophile, harte Blöcke, die saure Gruppen enthalten, mit einer Tg > 30 °C, C hydrophobe, harte Blöcke mit einer Tg > 50 °C, X eine Einheit, gebildet aus einer Verbindung mit mehreren Vinyl- oder Isopropenylgruppen, oder einen aus solchen Verbindungen entstandenen Homopolymerisat-Block, der in der Regel verzweigt bzw. vernetzt ist, bezeichnet und n das zahlenmäßige Verhältnis von A/B/C-Homopolymer-Blöcken zu der Einheit X bzw. zu dem Homopolymerisatblock X angibt, und wobei die Polymerblöcke A einen Anteil von 20 bis 99 Gew.-%, die Polymerblöcke B einen Anteil von 1 bis 30 Gew.-% und die Polymerblöcke C einen Anteil von 0 bis 79 Gew.-% an dem elastomeren Blockcopolymerisat ausmachen, bei der Herstellung von Flachdruckplatten, Tiefdruckzylindern und Photoresists sowie als Bindemittel in lichthärtbaren elastomeren Gemischen zur Herstellung von Reliefdruckplatten.

2. Verwendung nach Anspruch 1, dadurch gekennzeichnet, daß die weichen Polymerblöcke A aus konjugierten Dienen, die harten Polymerblöcke B aus ethylenisch α,β-ungesättigten Carbonsäuren, und die harten Polymerblöcke C aus Vinylaromaten gebildet sind.

3. Verwendung nach Anspruch 2, dadurch gekennzeichnet, daß das konjugierte Dien 1,3-Butadien, Isopren oder 2,3-Dimethyl-1,3-butadien ist.

4. Verwendung nach Anspruch 2, dadurch gekennzeichnet, daß die ethylenisch α,β-ungesättigte Carbonsäure Acrylsäure oder Methacrylsäure ist.

5. Verwendung nach Anspruch 2, dadurch gekennzeichnet, daß der Vinylaromat Styrol oder Vinylnaphthalin ist.

## Claims

1. Use of an elastomeric block copolymer of the structure A-B, B-A-B, C-A-B, C-A-C-B, B-C-A-C-B, AₙXBₙ, (A-B)ₙX, CₙX(A-B)ₙ, (C-A)ₙXBₙ, (C-A-B)ₙX, CₙX(A-C-B)ₙ, (C-A)ₙX(C-B)ₙ, (C-A-C)ₙXBₙ, (C-A-C-B)ₙX, BₙXAₙXBₙ, X(B-A-B)ₙX-, (B-C)ₙXAₙX(C-B)ₙ, BₙX(C-A-C)ₙXBₙ oder X(B-C-A-C-B)ₙX, A representing hydrophobic, soft blocks having a T_{g} of less than -30 °C, B representing hydrophilic, hard blocks containing acidic groups and having a T_{g} of more than 50 °C, X representing a unit formed from a compound having a plurality of vinyl or isopropenyl groups, or a homopolymer block which has been formed from such compounds and is as a rule branched or crosslinked, and n being the numerical ratio of A/B/C homopolymer blocks to the unit X or to the homopolymer block X, and the content of polymer blocks A in the elastomeric block copolymer being 20 to 99 % by weight, the content of polymer blocks B being 1 to 30 % by weight and the content of polymer blocks C being 0 to 79 % by weight, in the manufacture of planographic printing plates, gravure printing cylinders and photoresists and as binders in photocurable elastomeric mixtures for the manufacture of relief printing plates.

2. The use as claimed in claim 1, wherein the soft polymer blocks A are formed from conjugated dienes, the hard polymer blocks B are formed from ethylenically α,β-unsaturated carboxylic acids and the hard polymer blocks C are formed from vinylaromatics.

3. The use as claimed in claim 2, wherein 1,3-butadiene, isoprene or 2,3-dimethyl-1,3-butadiene are used as the conjugated diene.

4. The use as claimed in claim 2, wherein the ethylenically α,β-unsaturated carboxylic acid is acrylic acid or methacrylic acid.

5. The use as claimed in claim 2, wherein the vinylaromatic is styrene or vinylnaphthalene.

## Revendications

1. Utilisation d'un copolymère séquencé élastomère de structure générale A-B, B-A-B, C-A-B, C-A-C-B, B-C-A-C-B, AₙXBₙ, (A-B)ₙX, CₙX(A-B)ₙ, (C-A)ₙXBₙ, (C-A-B)ₙX, CₙX(A-C-B)ₙ, (C-A)ₙX(C-B)ₙ, (C-A-C)ₙXBₙ, (C-A-C-B)ₙX, BₙXAₙXBₙ, X(B-A-B)ₙX-, (B-C)ₙXAₙX(C-B)ₙ, BₙX(C-A-C)ₙXBₙ ou X(B-C-A-C-B)ₙX, A désignant des séquences souples hydrophobes ayant une Tᵥ <-30°C, B désignant des séquences rigides hydrophiles contenant des groupes acides, ayant une Tᵥ >30°C, C désignant des séquences rigides hydrophobes ayant une Tᵥ >50°C, X désignant un motif constitué d'un composé à plusieurs groupes vinyle ou isopropényle, ou d'une séquence d'homopolymère formé à partir de tels composés, qui est en général ramifiée ou réticulée, et n indiquant le rapport numérique des séquences d'homopolymères A/B/C au motif X ou à la séquence d'homopolymère X, et les séquences de polymère A représentant une proportion de 20 à 99 % en poids, les séquences de polymère B représentant une proportion de 1 à 30 % en poids et les séquences de polymère C représentant une proportion de 0 à 79 % en poids du copolymère séquencé élastomère, dans la fabrication de plaques pour l'impression à plat, de cylindres d'héliogravure et de photorésists, ainsi qu'en tant que liant dans des compositions élastomères photodurcissables, pour la fabrication de plaques d'impression en relief.

2. Utilisation selon la revendication 1, caractérisée en ce que les séquences de polymère souples A sont constituées de diènes conjugués, les séquences de polymère rigides B sont constituées d'acides carboxyliques à insaturation α,β-éthylénique, et les séquences de polymère rigides C sont constituées de composés vinylaromatiques.

3. Utilisation selon la revendication 2, caractérisée en ce que le diène conjugué est le 1,3-butadiène, l'isoprène ou le 2,3-diméthyl-1,3-butadiène.

4. Utilisation selon la revendication 2, caractérisée en ce que l'acide carboxylique à insaturation α,β-éthylénique est l'acide acrylique ou l'acide méthacrylique.

5. Utilisation selon la revendication 2, caractérisée en ce que le composé vinylaromatique est le styrène ou le vinylnaphtalène.
